# EUROPEAN PATENT APPLICATION

(11) **EP 4 602 994 A1**
(43) Date of publication of application: **20.08.2025**
(21) Application number: 23876649.7
(22) Date of filing: 09.10.2023
(51) Int. Cl.: A47L 11/28, A47L 11/40

(54) **HANDLE ADJUSTING DEVICE, AND FLOOR SCRUBBER**

(30) Priority: 11.10.2022 CN 202211240713
(71) Applicant: Nilfisk A/S, 2100 Copenhagen Ø (DK)
(72) Inventor: HUANG, Haojian, Dongguan, Guangdong 523000 (CN); KUANG, Beixiang, Dongguan, Guangdong 523000 (CN); TAN, Jianhui, Dongguan, Guangdong 523000 (CN); LI, Zhibin, Dongguan, Guangdong 523000 (CN)
(74) Representative: Larsen & Birkeholm A/S
(86) International application number: PCT/CN2023/123571
(87) International publication number: WO 2024/078447

(57) **Abstract**

This application proposes a handle adjustment device. The handle adjustment device comprises: a base (1); a handle bracket (2), wherein the handle bracket (2) is connected to said base (1) in a manner that it can swing relative to said base (1); and a locking mechanism (3), wherein the locking mechanism (3) is capable of switching said handle bracket (2) between a locked state and an unlocked state. When said handle bracket (2) is in the locked state, said locking mechanism (3) causes said base (1) and said handle bracket (2) to press against each other, so that said handle bracket (2) is locked to said base (1). When said handle bracket (2) is in the unlocked state, said base (1) and said handle bracket (2) are not pressed against each other, and said handle bracket (2) can rotate relative to said base (1).

This application also relates to a floor washer.

## Description

### Technical Field

This application relates to a handle adjustment device and a floor washer.

### Background technology

At present, the handle of the floor washer cannot be adjusted in angle, which fails to meet the diverse needs of users. Chinese Patent CN104129422B discloses a steering wheel adjustment mechanism, which adjusts and locks the angle of the steering wheel by inserting a pin into different adjustment holes. This structure imposes limitations on the adjustment angle of the steering wheel and cannot achieve stepless adjustment. Additionally, it is difficult to control the fitting clearance between the pin and the adjustment holes. An excessive clearance will cause looseness in the steering wheel.

### Summary of the Invention

This application aims to propose a handle adjustment device that enables stepless adjustment of the handle angle.

This application also proposes a floor washer including the afore-said handle adjustment device.

An embodiment of this application proposes a handle adjustment device, which comprises:
A base;
A handle bracket, which is connected to the base in a manner that it can swing relative to the base; and
A locking mechanism, which can switch the handle bracket between a locked state and an unlocked state.

When said handle bracket is in the locked state, said locking mechanism causes the base and the handle bracket to press against each other, so that the handle bracket is locked to said base.

When said handle bracket is in the unlocked state, said base and said handle bracket are not pressed against each other, and said handle bracket can rotate relative to the base.

In at least one possible embodiment, said base has a reference curved surface, and said handle bracket is configured to fit said reference curved surface during the process of swinging relative to said base.

In at least one possible embodiment, said reference curved surface is an arc surface, and the center of the arc corresponding to the arc surface is located outside said base.

In at least one possible embodiment, said locking mechanism comprises a handle, a rod, and a pressing piece. Said handle bracket is provided with a limit slot, and said rod passes through said limit slot. Said pressing piece can slide along the limit slot and is installed on said handle bracket in a non-rotatable manner relative to said handle bracket. Said handle is connected to one end of said rod, and the pressing piece is connected to the other end of the rod. One of said handle and said pressing piece is threadedly connected to the rod.

When said handle is rotated, the handle and said pressing piece can press said base and said handle bracket between them, putting said handle bracket in the locked state. Or, said handle and said pressing piece can release the pressure on said base and said handle bracket between them, putting said handle bracket in the unlocked state.

In at least one possible embodiment, said handle is fixedly connected to said rod, and said pressing piece is threadedly connected to said rod.

Said handle bracket and said base are connected in a sliding fit manner through an arc-shaped chute, enabling said handle bracket to move relative to said base.

In at least one possible embodiment, said limit slot is arc-shaped, and said limit slot has the same radian as the chute.

In at least one possible embodiment, said locking mechanism comprises a handle, a rod, and a pressing piece. Said handle bracket is provided with a limit slot, and said rod passes through said limit slot. Said handle is connected to one end of said rod, and the other end of said rod is threadedly connected to a threaded hole in said base. Said pressing piece is connected to said rod.

When said handle is rotated, said pressing piece can make said base press said handle bracket, thus putting said handle bracket in the locked state. Or, said pressing piece can release the pressure of said base on said handle bracket, thus putting said handle bracket in the unlocked state.

In at least one possible embodiment, said locking mechanism further comprises an anti-detachment piece. Said anti-detachment piece is connected to said rod, making the radial dimension of said rod larger than the inner diameter of said threaded hole, so as to prevent said rod from detaching from said threaded hole.

In at least one possible embodiment, said handle bracket is connected to said base through a rotating shaft, enabling said handle bracket to rotate relative to said base.

In at least one possible embodiment, said limit slot is arc-shaped, and the center of the circle of said limit slot is located at said rotating shaft.

In at least one possible embodiment, said base is provided with a base through-hole, and said handle bracket is provided with a handle bracket through-hole. The base through-hole and said handle bracket through-hole are used for cables to pass through.

An embodiment of this application further proposes a floor washer, which comprises said handle adjustment device described in any one of the above technical solutions.

By adopting the above technical solutions, the handle adjustment device can adjust the angle of the handle stepless, and can be locked at any time when the appropriate angle is adjusted.

### Description of the Drawings

Figure 1 shows a schematic structural diagram of the handle adjustment device according to the first embodiment of this application.
Figure 2 shows a schematic structural diagram of the handle adjustment device (the housing is not shown) according to the first embodiment of this application.
Figure 3 shows a schematic structural diagram of the handle adjustment device (the handle bracket is not shown) according to the first embodiment of this application.
Figure 4 shows a schematic structural diagram of the handle bracket of the handle adjustment device according to the first embodiment of this application.
Figures 5A to 5C show schematic structural diagrams of the handle bracket of the handle adjustment device in different positions according to the first embodiment of this application.
Figure 6 shows a schematic structural diagram of the handle adjustment device according to the second embodiment of this application.
Figures 7 and 8 show schematic structural diagrams of the handle adjustment device (the housing is not shown) according to the second embodiment of this application.
Figure 9 shows a schematic structural diagram of the base of the handle adjustment device according to the second embodiment of this application.
Figures 10A to 10C show schematic structural diagrams of the handle bracket of the handle adjustment device in different positions according to the second embodiment of this application.

### Explanation of Reference Numerals in the Drawings

1 Base
11 Base body
12 Housing
13 Sliding fit part
14 Base through hole
15 Rotating shaft mounting seat
16 Locking mechanism mounting seat
2 Handle bracket
21 Chute
22 Rib plate
23 Limit slot
24 Handle bracket through hole
3 Locking mechanism
31 Handle
32 Rod
33 Pressing piece
34 Convex part
35 Anti-detachment piece
4 Rotating shaft

### Specific Embodiments

In order to illustrate the above objectives, features and advantages of this application more clearly, the specific embodiments of this application will be described in detail in this section in combination with the accompanying drawings. In addition to the various embodiments described in this section, this application can also be implemented in other different ways. Without departing from the spirit of this application, those skilled in the art can make corresponding improvements, deformations and replacements. Therefore, this application is not limited by the specific embodiments disclosed in this section. The protection scope of this application shall be subject to the claims.

### (First Embodiment)

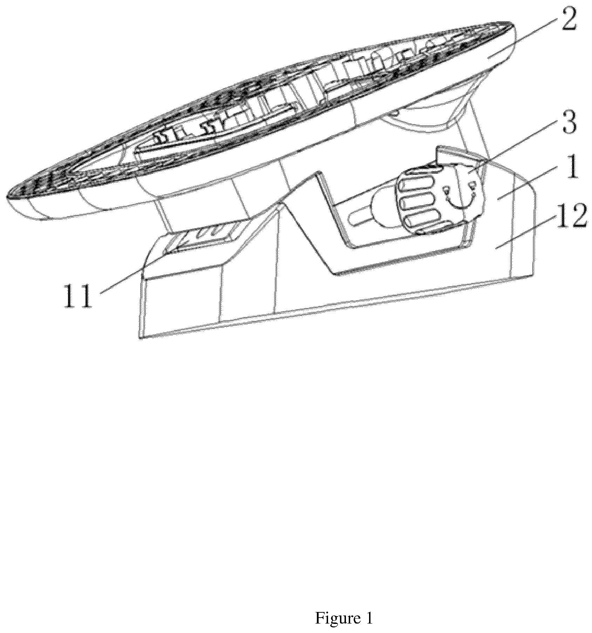

As shown in Figures 1 to 5C, the first embodiment of this application proposes a handle adjustment device, which comprises a base 1, a handle bracket 2 and a locking mechanism 3. The handle bracket 2 is movably connected to the base 1 relative to the base 1. The handle bracket 2 is used for installing a handle, and the locking mechanism 3 can lock the handle bracket 2 to the base 1 or unlock it.

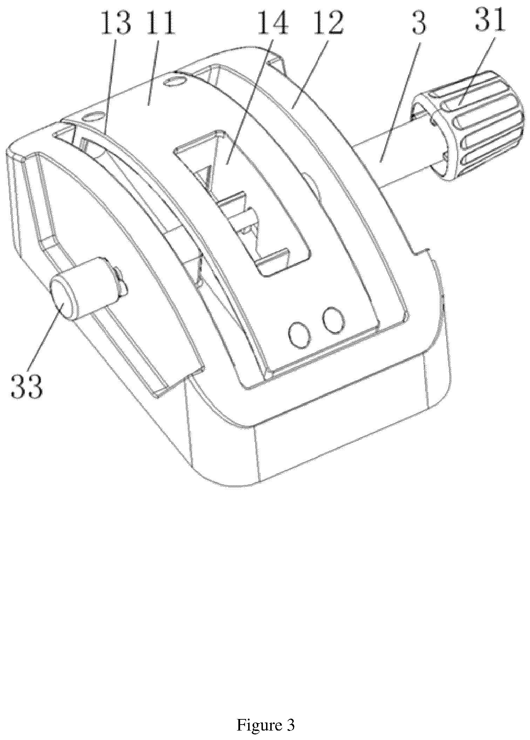

As shown in Figures 1 and 3, the base 1 comprises a base body 11 and a housing 12, and the housing 12 can be connected to the base body 11.

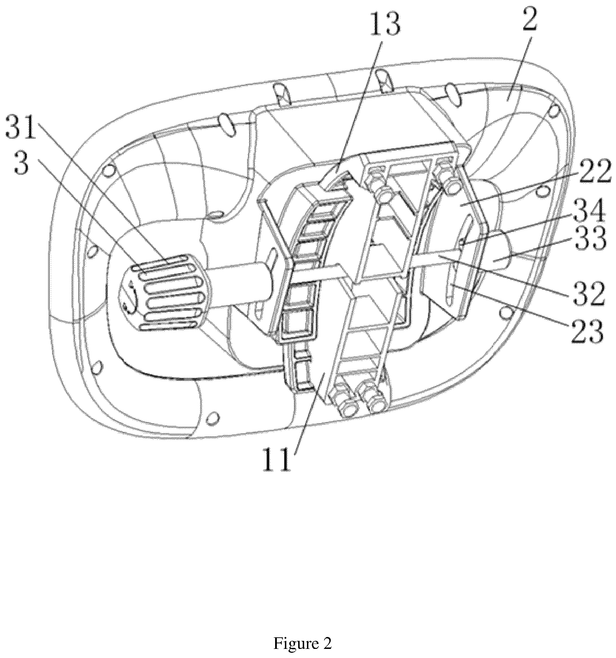

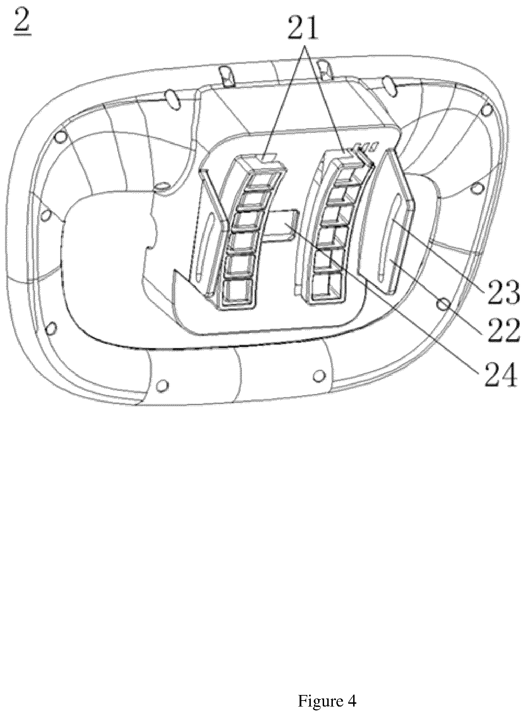

As shown in Figures 2 and 4, the handle bracket 2 can be provided with a chute 21, and the chute 21 can be arc-shaped.

The handle bracket 2 can be provided with two rib plates 22. The two rib plates 22 can be located outside the housing 12 and clamp the housing 12. By pressing the two rib plates 22 with the locking mechanism 3, the handle bracket 2 can be locked relative to the housing 12.

Two chutes 21 can be arranged at intervals in the width direction of the handle bracket 2, and the two chutes 21 can keep the sliding of the handle bracket 2 stable and smooth.

The rib plate 22 is provided with a limit slot 23. The limit slot 23 can be an arc-shaped slot, and the limit slot 23 can have the same radian as the chute 21. The limit slot 23 can limit the sliding range of the handle bracket 2, thereby limiting the swing angle of the handle bracket 2 relative to the base 1.

The central angle corresponding to the limit slot 23 can be, for example, 25 degrees, so that the handle bracket 2 can rotate within a range of 25 degrees to adjust the angle.

As shown in Figures 2 and 3, the base body 11 is provided with a reference curved surface that cooperates with the chute 21. For example, the reference curved surface can be the arc surface of the arc-shaped plate-like sliding fit part 13. The center of the arc corresponding to the arc surface is located outside the base 1, and the reference curved surface can have the same radian as the chute 21. The sliding fit part 13 can be inserted into the chute 21 from the end of the chute 21, enabling the handle bracket 2 to slide along the arc of the chute 21 relative to the base 1, and then adjust the angle of the handle bracket 2 relative to the base 1. For example, for users of different heights, different operating heights of the handle bracket 2 can be provided. The handle bracket 2 fits the reference curved surface during the process of swinging relative to the base 1.

It is worth noting that the rotation center of the handle bracket 2 rotating along the arc of the chute 21 relative to the base 1 is virtual, that is, the rotation center may not be located on the base 1. This enables the dimension of the base 1 in the height direction to be very small, making the whole product very compact.

A sliding fit part 13 can be provided at each of the two ends in the width direction of the base 1. The two sliding fit parts 13 can keep the sliding of the handle bracket 2 stable and smooth.

The handle can be provided with an operation panel and/or a display screen. The base body 11 can be provided with a base through hole 14, and the base through hole 14 can allow cables to pass through the base 1. The cables can be used to connect the operation panel and/or the display screen.

As shown in Figures 1 to 3, the locking mechanism 3 comprises a handle 31, a rod 32 and a pressing piece 33.

The rod 32 can be in the shape of a elongated cylinder. The rod 32 can pass through the limit slots 23 of the two rib plates 22. The handle 31 is fixedly connected to one end of the rod 32, and the other end of the rod 32 is provided with threads. The pressing piece 33 is threadedly connected to the other end of the rod. The handle 31 and the pressing piece 33 are respectively located on both sides of the two rib plates 22. The handle 31 can be provided with uneven patterns, which can increase the friction when holding and rotating the handle 31.

The pressing piece 33 is provided with a convex part 34. The convex part 34 can be inserted into the limit slot 23, enabling the pressing piece 33 to slide along the limit slot 23 but not to rotate relative to the limit slot 23 or the rib plate 22. When the handle 31 is rotated, the rod 32 can rotate relative to the pressing piece 33 along with the handle 31, and the distance between the handle 31 and the pressing piece 33 changes.

In other possible embodiments, the rod 32 and the pressing piece 33 can be fixedly connected, and the handle 31 can be threadedly connected to the rod 32. When the handle 31 is rotated, the handle 31 rotates relative to the rod 31 and the pressing piece 33, and the distance between the handle 31 and the pressing piece 33 changes.

When the distance between the handle 31 and the pressing piece 33 decreases, the handle 31 and the pressing piece 33 make the two rib plates 22 press the housing 12, locking the position of the handle bracket 2. When the distance between the handle 31 and the pressing piece 33 increases, the two rib plates 22 no longer press the housing 12, and then the handle bracket 2 is unlocked and its angle can be adjusted.

The handle bracket 2 can be provided with a handle bracket through hole 24. The handle bracket through hole 24 can allow cables to pass through the handle bracket 2, and the cables can be used to connect the operation panel and/or the display screen.

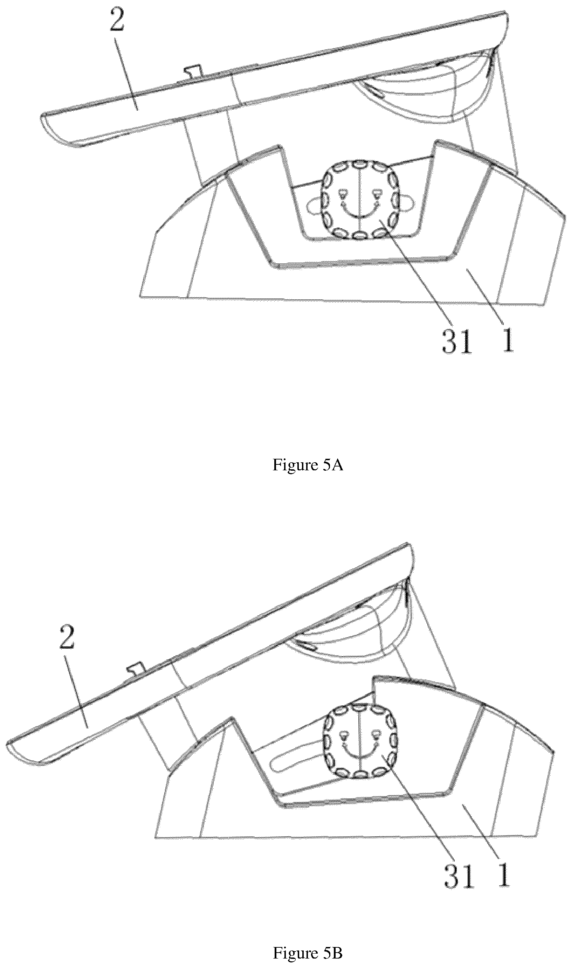

As shown in Figure 5A, the rod 32 is located in the middle of the limit slot 23, and the handle bracket 2 is at a moderate angle.

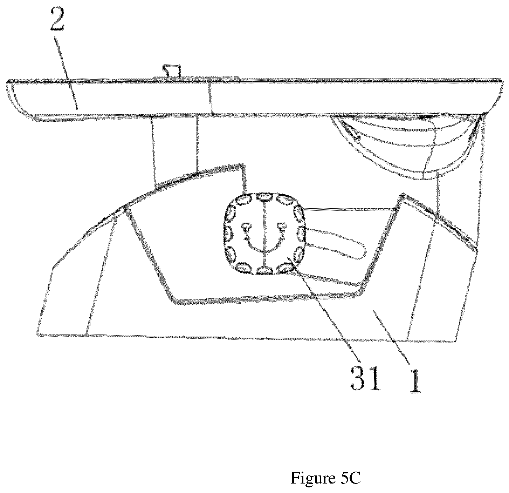

As shown in Figure 5B, the rod 32 is located at one end of the limit slot 23, and the angle of the handle bracket 2 is more upright. As shown in Figure 5C, the rod 32 is located at the other end of the limit slot 23, and the angle of the handle bracket 2 is more horizontal. The handle bracket 2 can adjust the angle stepless, and can be locked at any time when the appropriate angle is adjusted. The locking mechanism 3 can clamp and lock the handle bracket 2 at any position, realizing stepless adjustment and fixation. The locked handle is firmly fixed without play and will not shake.

### (Second Embodiment)

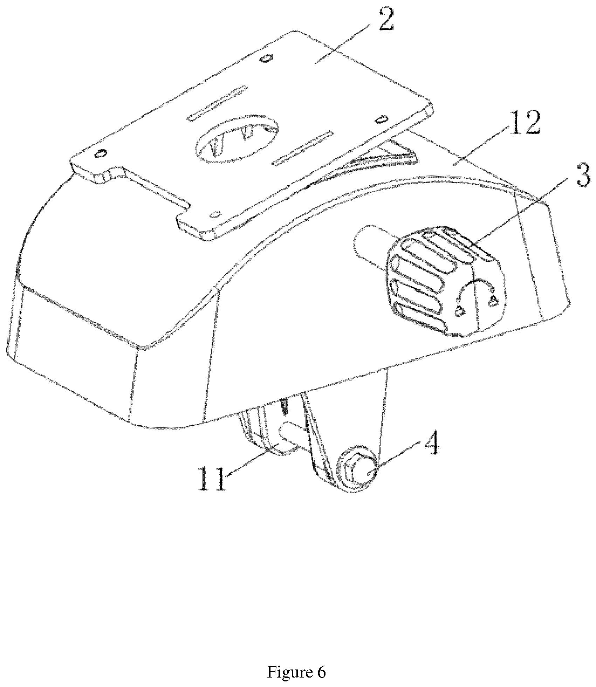

As shown in Figures 6 to 10C, the second embodiment of this application proposes a handle adjustment device, which comprises a base 1, a handle bracket 2, a locking mechanism 3 and a rotating shaft 4.

In the following description, for the components of the handle angle adjustment device of the second embodiment that are the same as or similar to those of the handle angle adjustment device of the first embodiment, the same reference numerals are used. The differences between the handle angle adjustment device of the second embodiment and the handle angle adjustment device of the first embodiment include the cooperation mode between the base 1 and the handle bracket 2 and the specific structure of the locking mechanism 3.

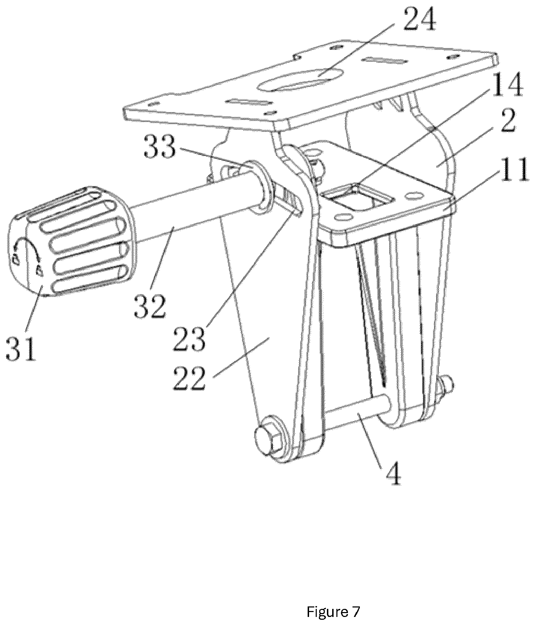

As shown in Figures 6 and 7, the base 1 and the handle bracket 2 are rotatably connected to each other through the rotating shaft 4, enabling the handle bracket 2 to rotate relative to the base 1.

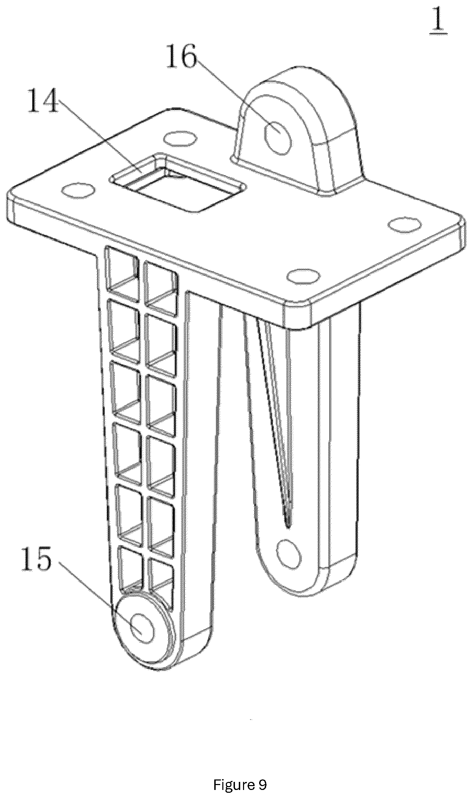

As shown in Figure 9, the base 1 is provided with a rotating shaft mounting seat 15 and a locking mechanism mounting seat 16. The rotating shaft mounting seat 15 is provided with a through hole for the rotating shaft 4 to pass through. The two rib plates 22 of the handle bracket 2 are provided with through holes for the rotating shaft 4 to pass through. The rotating shaft 4 can pass through the rotating shaft mounting seat 15 and the handle bracket 2, enabling the handle bracket 2 to rotate relative to the rotating shaft mounting seat 15. The two rib plates 22 can be located outside the rotating shaft mounting seat 15, and the rotating shaft mounting seat 15 is clamped by the rib plates 22. The rib plates 22 can be located inside the housing 12. The handle bracket 2 connected to the base 1 through the rotating shaft 4 can rotate smoothly.

As shown in Figures 6 to 8, the locking mechanism 3 comprises a handle 31, a rod 32, a pressing piece 33 and an anti-detachment piece 35.

The handle 31 is connected to one end of the rod 32, and the other end of the rod 32 is provided with threads. The locking mechanism mounting seat 16 is provided with a threaded hole. One of the two rib plates 22 is provided with a limit slot 23. The limit slot 23 is arc-shaped, and the center of the circle of the limit slot 23 is located at the rotating shaft 4. The other end of the rod 32 can pass through the limit slot 23 and be threadedly connected to the locking mechanism mounting seat 16.

The pressing piece 33 can be connected to the rod 32, and the position of the pressing piece 33 on the rod 32 cannot be changed, or the pressing piece 33 can be fixedly connected to the rod 32. When the handle 31 is rotated, the distance between the pressing piece 33 and the locking mechanism mounting seat 16 can change. When the distance between the pressing piece 33 and the locking mechanism mounting seat 16 decreases, the rib plate 22 presses against the locking mechanism mounting seat 16, locking the position of the handle bracket 2. When the distance between the pressing piece 33 and the locking mechanism mounting seat 16 increases, the rib plate 22 no longer presses against the locking mechanism mounting seat 16, and then the handle bracket 2 is unlocked and its angle can be adjusted.

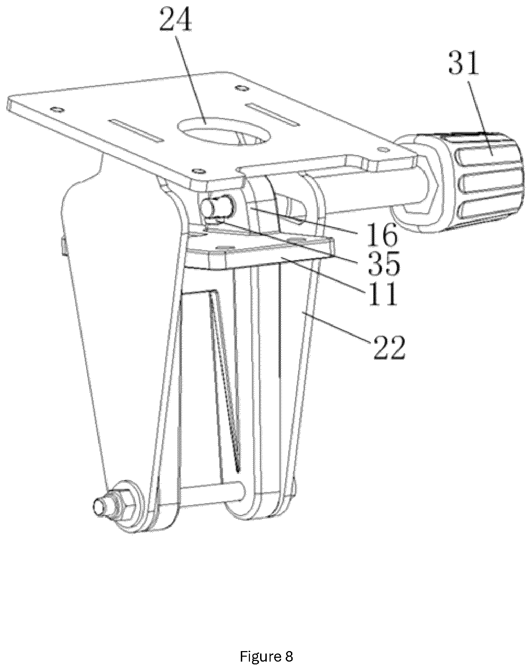

As shown in Figure 8, the other end of the rod 32 can be provided with an anti-detachment piece 35. The anti-detachment piece 35 makes the radial dimension of the end of the rod 32 larger than the inner diameter of the threaded hole, thereby preventing the rod 32 from detaching from the threaded hole. The anti-detachment piece 35 can be a bolt, and the head of the bolt can protrude from the rod 32. The bolt can be threadedly connected to the rod 32 along the radial direction of the rod 32. Of course, the structure of the anti-detachment piece 35 and its connection mode with the rod 32 in this application are not limited to this.

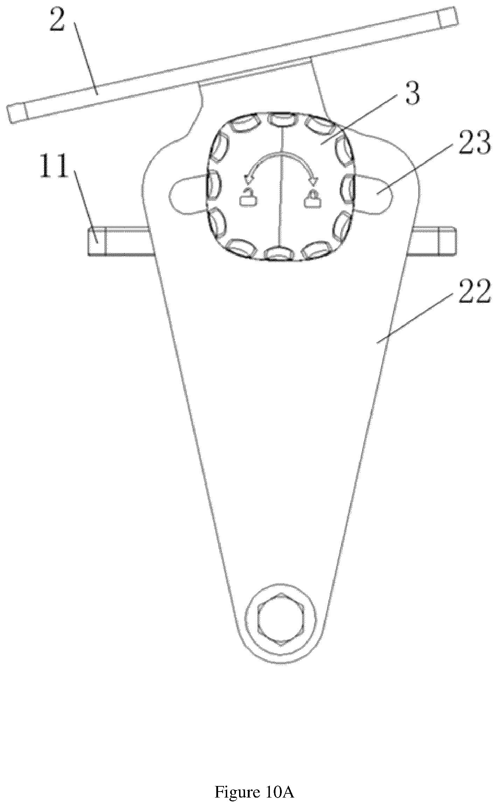

As shown in Figure 10A, the rod 32 is located in the middle of the limit slot 23, and the handle bracket 2 is at a moderate angle.

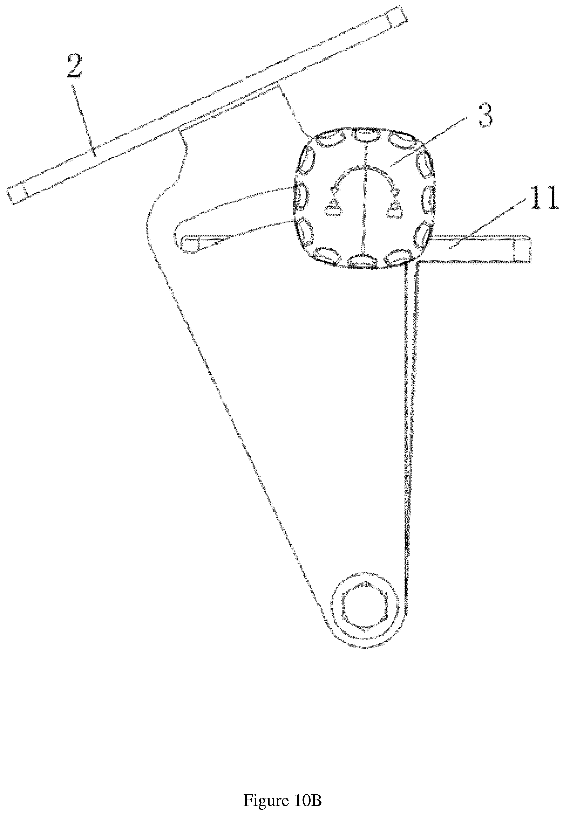

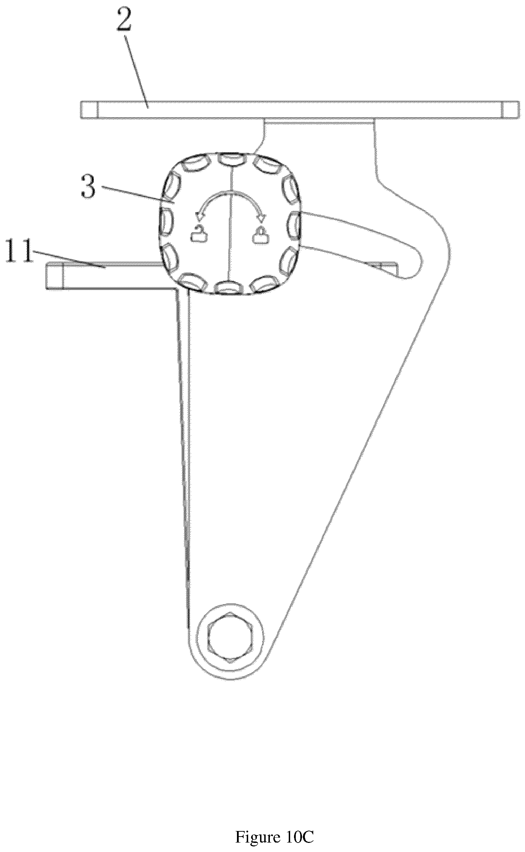

As shown in Figure 10B, the rod 32 is located at one end of the limit slot 23, and the angle of the handle bracket 2 is more upright. As shown in Figure 10C, the rod 32 is located at the other end of the limit slot 23, and the angle of the handle bracket 2 is more horizontal.

In other possible embodiments, the locking mechanism 3 can also use the clamping structure of the prior art to press and clamp the handle bracket and the base or the housing of the base, such as a quick-release screw structure.

This application also provides a floor washer, which includes the above-mentioned handle adjustment device. When using the floor washer, the user can adjust the handle to an appropriate angle and hold the handle of the floor washer.

It should be understood that at least some aspects or features of the above-mentioned embodiments, examples can be appropriately combined.

In this application, unless otherwise clearly stated or defined, terms such as "install", "assemble", "put together", "connect", "link", "join", "attach", "abut", "communicate", "interconnect", "conduct", "fix", "fasten" should be understood in a broad sense. For example, it can be direct or indirect. For example, regarding connection, it can be a fixed connection, a detachable connection, or an integrated connection; it can be a mechanical connection or an electrical connection; it can be a direct connection or an indirect connection through an intermediate medium, and it can be the communication inside two components or the interaction relationship between two components, unless otherwise clearly stated or defined. For example, regarding communication/conductivity, it can be a direct communication/conductivity or an indirect communication/conductivity via an intermediate medium. For those of ordinary skill in the art, the specific meanings of the above terms in this application can be understood according to specific situations.

In this application, unless otherwise clearly stated or defined, that one component is set/installed/located/housed/placed in/inside/within another component can be either of the following two situations: a part or most of one component is located inside the other component; and one component is completely housed inside the other component.

Although this application has been described in detail using the above embodiments, for those skilled in the art, this application is obviously not limited to the embodiments described in this specification. This application can be modified and implemented as a modified embodiment without departing from the spirit and scope of this application as determined by the claims. Therefore, the descriptions in this specification are for illustrative purposes and do not have any limiting meaning for this application.

## Claims

1. A handle adjustment device, **characterized in that** it comprises:
A base (1);
A handle bracket (2), wherein said handle bracket (2) is connected to said base (1) in a manner that it can swing relative to said base (1); and
A locking mechanism (3), wherein the locking mechanism (3) is capable of switching said handle bracket (2) between a locked state and an unlocked state,
When said handle bracket (2) is in the locked state, said locking mechanism (3) causes said base (1) and said handle bracket (2) to press against each other, so that said handle bracket (2) is locked to said base (1),
When said handle bracket (2) is in the unlocked state, said base (1) and said handle bracket (2) are not pressed against each other, and said handle bracket (2) can rotate relative to said base (1).

2. The handle adjustment device according to claim 1, **characterized in that** said base (1) has a reference curved surface, and said handle bracket (2) is configured to fit said reference curved surface during the process of swinging relative to said base (1).

3. The handle adjustment device according to claim 2, **characterized in that** said reference curved surface is an arc surface, and the center of the arc corresponding to said arc surface is located outside said base (1).

4. The handle adjustment device according to claim 1, **characterized in that** said locking mechanism (3) comprises a handle (31), a rod (32) and a pressing piece (33), where said handle bracket (2) is provided with a limit slot (23), the aforesaid rod (32) passes through said limit slot (23), said pressing piece (33) is installed on said handle bracket (2) in a manner that it can slide along said limit slot (23) and cannot rotate relative to said handle bracket (2), said handle (31) is connected to one end of said rod (32), said pressing piece (33) is connected to the other end of said rod (32), and one of said handle (31) and said pressing piece (33) is threadedly connected to said rod (32),
When said handle (31) is rotated, said handle (31) and said pressing piece (33) can press said base (1) and said handle bracket (2) between them, putting said handle bracket (2) in the locked state, or said handle (31) and said pressing piece (33) can release the pressure on said base (1) and said handle bracket (2) between them, putting said handle bracket (2) in the unlocked state.

5. The handle adjustment device according to claim 4, **characterized in that**:
Said handle (31) is fixedly connected to said rod (32), and said pressing piece (33) is threadedly connected to said rod (32),
Said handle bracket (2) and said base (1) are connected in a sliding fit manner through an arc-shaped chute (21), enabling said handle bracket (2) to move relative to said base (1).

6. The handle adjustment device according to claim 5, **characterized in that** said limit slot (23) is arc-shaped, and said limit slot (23) has the same radian as said chute (21).

7. The handle adjustment device according to claim 1, **characterized in that** said locking mechanism (3) comprises a handle (31), a rod (32) and a pressing piece (33), where said handle bracket (2) is provided with a limit slot (23), said rod (32) passes through said limit slot (23), said handle (31) is connected to one end of said rod (32), the other end of said rod (32) is threadedly connected to a threaded hole of said base (1), and said pressing piece (33) is connected to said rod (32).
When said handle (31) is rotated, said pressing piece (33) can make said base (1) press said handle bracket (2), thus putting said handle bracket (2) in the locked state; or said pressing piece (33) can release the pressure of said base (1) on said handle bracket (2), thus putting said handle bracket (2) in the unlocked state.

8. The handle adjustment device according to claim 7, **characterized in that** said locking mechanism (3) further comprises an aforesaid anti-detachment piece (35), and said anti-detachment piece (35) is connected to said rod (32) to make the radial dimension of said rod (32) larger than the inner diameter of said threaded hole, so as to prevent said rod (32) from detaching from said threaded hole.

9. The handle adjustment device according to claim 7, **characterized in that** said handle bracket (2) is connected to said base (1) through a rotating shaft (4), enabling said handle bracket (2) to rotate relative to said base (1).

10. The handle adjustment device according to claim 9, **characterized in that** said limit slot (23) is arc-shaped, and the center of the circle of said limit slot (23) is located at said rotating shaft (4).

11. The handle adjustment device according to claim 1, **characterized in that** said base (1) is provided with a base through hole (14), said handle bracket (2) is provided with a handle bracket through hole (24), and said base through hole (14) and said handle bracket through hole (24) are used for cables to pass through.

12. A floor washer, **characterized in that** said floor washer comprises said handle adjustment device according to any one of patent claims 1 to 11.
